Europäisches Patentamt

European Patent Office

Office européen des brevets

(11) Publication number: **0 483 367 A1**

(19)

(12) **EUROPEAN PATENT APPLICATION**
published in accordance with Art.
158(3) EPC

(21) Application number: **91908646.2**

(22) Date of filing: **26.04.91**

(86) International application number:
**PCT/JP91/00583**

(87) International publication number:
**WO 91/18332 (28.11.91 91/27)**

(51) Int. Cl.⁵: **G05B 13/02**

(30) Priority: **15.05.90 JP 124572/90**

(43) Date of publication of application:
**06.05.92 Bulletin 92/19**

(84) Designated Contracting States:
**DE IT SE**

(71) Applicant: **FANUC LTD.**
**3580, Shibokusa Aza-Komanba, Oshino-mura**
**Minamitsuru-gun, Yamanashi 401-05(JP)**

(72) Inventor: **TORII, Nobutoshi**
**Fuyo Haitsu 308, 65-4, Takakuramachi**
**Hachioji-shi, Tokyo 132(JP)**

Inventor: **NIHEI, Ryo, Fanuc Mansion**
**Harimomi 7-210**
**3539-1, Shibokusa, Oshino-mura**
**Minamitsuru-gun, Yamanashi 401-05(JP)**
Inventor: **KATO, Tetsuaki, Fanuc Mansion**
**Harimomi 8-101**
**3511-1, Shibokusa, Oshino-mura**
**Minamitsuru-gun, Yamanashi 401-05(JP)**

(74) Representative: **Brunner, Michael John**
**GILL JENNINGS & EVERY 53-64 Chancery**
**Lane**
**London WC2A 1HN(GB)**

(54) OBSERVER CONTROL SYSTEM.

(57) An observer control system which monitors a machine system, estimates state variables and controls the machine system. The system comprises a main observer (7) for estimating the state variables relating to linear elements of the machine system (4a), a disturbance estimation observer (8) for estimating the state variables relating to non-linear elements of the machine system, and an adder (6) for removing the non-linear elements from the input of the main observer (7). The disturbance estimation observer (8) estimates the non-linear state variables and deletes the non-linear terms from the main observer (8). Since the main observer (7) can estimate the state variables by only the linear term, the estimated state variables free from the influences of the non-linear term can be obtained. When the machine system is controlled by this estimated state variable, the state feedback gain of the machine system can be increased.

Fig. 1

## Technical Field

The present invention relates to an observer control system for controlling a mechanical system, and more particularly to an observer control system for controlling the mechanism of a robot.

## Background Art

Difficulty is experienced in controlling mechanical systems of low rigidity, such as the mechanism of a robot, at high speed under ordinary feedback or feed-forward control. The high-speed control process can be improved considerably with a feedback sensor mounted on the tip end of the robot mechanism. However, mechanical limitations make it difficult to install such a sensor on the tip end of an arm. It is customary to use an observer for estimating various positions, speeds, accelerations, etc. of the mechanism to determine estimated state variables, and control the mechanical system with the estimated state variables for high-speed stable operation.

In the control of the mechanism of a robot or the like, however, an input signal supplied to the observer and hence the estimated state variables are affected by a nonlinear term such as a gravity term due to gravity. As a result, the estimated state variables are offset, lowering the observer characteristics to a large extent, so that a large state feedback gain cannot be obtained for state feedback control.

## Disclosure of the Invention

In view of the aforesaid drawbacks of the conventional observer control system, it is an object of the present invention to provide an observer control system having a disturbance estimating observer for eliminating a nonlinear term that is contained in an input signal applied to a main observer.

To achieve the object, there is provided in accordance with the present invention an observer control system for monitoring a mechanical system to estimate a state variable to control the mechanical system, comprising a main observer for estimating a state variable with respect to a linear element of the mechanical system, a disturbance estimating observer for estimating a state variable with respect to a nonlinear element of the mechanical system, and an adder for eliminating the nonlinear element from an input signal to be applied to the main observer.

The disturbance observer estimates a nonlinear state variable, the eliminates the estimated nonlinear state variable, i.e., a nonlinear term, from the main observer. Since the main observer estimates a state variable with only a linear term, the main observer can estimate the state variable without being affected by the nonlinear term. When the mechanical system is controlled with the estimated state variable, the state feedback gain of the mechanical system is increased.

## Brief Description of the Drawings

FIG. 1 is a block diagram of an observer control system according to an embodiment of the present invention;

FIG. 2 is a block diagram of the hardware arrangement of a robot system incorporating the observer control system according to the present invention;

FIG. 3 is a diagram illustrative of a main observer;

FIG. 4 is a block diagram of a disturbance estimating observer; and

FIG. 5 is a diagram showing a state equation for the disturbance estimating observer shown in FIG. 4

## Best Mode for Carrying Out the Invention

An embodiment of the present invention will hereinafter be described with reference to the drawings.

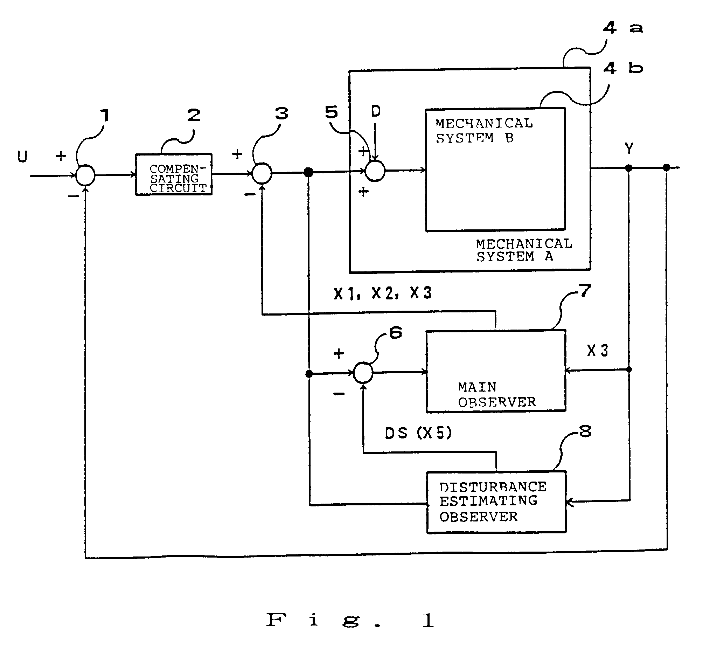

FIG. 1 shows in block form an observer control system according to an embodiment of the present invention.

As shown in FIG. 1, a command input signal U is applied to an adder 1 by which a feedback quantity Y is subtracted from the command input signal U. The adder 1 then applies an output signal to a compensating circuit 2. It is assumed that the command input signal is a torque command input signal. The compensating circuit 2, which comprises a PI (proportional plus integral) control circuit or the like, applies an output signal to an adder 3 that subtracts feedback quantities, i.e., estimated state variables, from a main observer 7 from the applied output signal. An output signal from the adder 3 is supplied to a mechanical system A (4a). The mechanical system A (4a) comprises a linear mechanical system B (4b) and a disturbance D such as a gravity term or the like. The disturbance D is added to the output signal from the adder 3 by an imaginary adder 5.

The output signal from the adder 3 is also applied to an adder 6 by which a nonlinear term Ds determined by a disturbance estimating observer 8 is subtracted from the applied output signal. The adder 6 applies an output signal to the main observer 7. The nonlinear term Ds is substantially equal to a disturbance D contained in the mechanical system A (4a). As a result, only a linear term is applied as an input signal from the adder 6 to the main observer 7. The main observer 7 estimates state variables X1, X2, X3 based on the input signal from the adder 6 and a feedback signal Y from the mechanical system B (4b). Details of the estimated state variables X1, X2, X3 will be described later on.

Since the input signal applied from the adder 6 to the main observer 7 does not include the nonlinear term Ds, the estimated state variables X1, X2, X3 are not affected by the nonlinear term. Therefore, the main observer 7 has improved characteristics for increasing the state feedback gain. The estimated state variables X1, X2, X3 are subtracted as a control loop feed back signal from the output signal of the compensating circuit 2 by the adder 3.

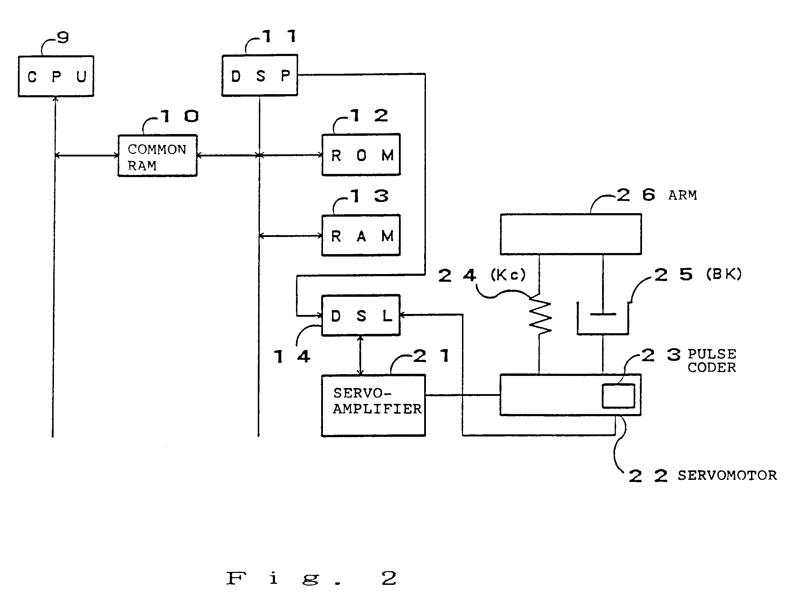

FIG. 2 shows in block form the hardware arrangement of a robot system which incorporates the observer control system according to the present invention. The robot system includes a host processor 9 for controlling the robot system in its entirety. The host processor 9 writes a robot position command into a common RAM 10. A ROM, a RAM, and other unit connected to the host processor 9 are omitted from illustration.

The robot system includes a servomotor 22 controlled by a DSP (digital signal processor) 11 that reads the position commands from the common RAM 10 at constant time intervals and applies voltage commands to a digital servo LSI (DSL) 14 according to a system program stored in a ROM 12. Necessary calculations are carried out using a RAM 13.

The DSP 11 calculates a speed command based on an error corresponding to the difference between a position command read therein and a position feedback quantity supplied from a pulse coder 23 contained in the servomotor 22. The DSP 11 also differentiates the position feedback quantity into a speed feedback quantity, and calculates a torque command based on the difference between the calculated speed feedback quantity and a speed command.

A servoamplifier 21 energizes the servomotor 22 in response to a voltage command. The servomotor 22 actuates a robot arm 26 through a speed reducer. In FIG. 2, the speed reducer is schematically illustrated as a spring component 24 (spring constant Kc) and a damping constant 25 (damping constant Bk) of its mechanical system.

The DSP 11 performs the functions of the compensating circuit 2, the main observer 7, and the disturbance estimating observer 8 shown in FIG. 1.

A robot model will be described below with reference to FIG. 2.

Various conditions of a load on the robot model are defined as follows:

Jt: Load inertia (converted on the motor side); and

$\theta t$: Angle of the load (converted on the mode side).

The speed reducer has the following constants:

Bk: Viscosity term; and

Kc: Spring constant.

The motor has the following constants:

Jm: Rotor inertia; and

$\theta m$: Motor angle.

First, a state transition matrix is generated. An equation of motion with respect to the motor is given as follows:

$$T = Jm*\theta m^{(2)} + Bk*(\theta m^{(1)} - \theta t^{(1)}) + Kc*(\theta m - \theta t)- \quad (1).$$

An equation of motion with respect to the load is given as follows:

$$0 = Jt*\theta t^{(2)} + Bk*(\theta t^{(1)} - \theta m^{(1)}) + Kc*(\theta t - \theta m) \quad - (2).$$

It is assumed that

$$\theta m - \theta t = \epsilon t \quad (3a)$$

$$\theta m^{(1)} - \theta t^{(1)} = \epsilon t^{(1)} \quad (3b)$$

$$\theta m^{(2)} - \theta t^{(2)} = \epsilon t^{(2)} \quad (3c).$$

The equation (1) is divided by Jm, the equation (2) by Jt, and both sides of the equations are subtracted one from the other, obtaining the following equations:

$$(T/Jm) = \epsilon t^{(2)} + [(Bk/Jm) + (Bk/Jt)]\epsilon t^{(1)} + [(Kc/Jm) + (Kc/Jt)]\epsilon t$$
$$\epsilon t^{(2)} = - [(Bk/Jm) + (Bk/Jt)]\epsilon t^{(1)} + [(Kc/Jm) + (Kc/Jt)]\epsilon t + (T/Jm) \quad (4).$$

Solving the equation (1) for $\theta m^{(2)}$ and substituting the equations (3a), (3b), and (3c), the following equation is satisfied:

$$\theta m^{(2)} = - (Bk/Jm)\epsilon t^{(1)} - (Kc/Jm)\epsilon t + (T/Jm) \quad (5).$$

If it is assumed that

$\epsilon t^{(1)} = X1,$
$\epsilon t = X2,$ and
$\theta m^{(1)} = X3,$

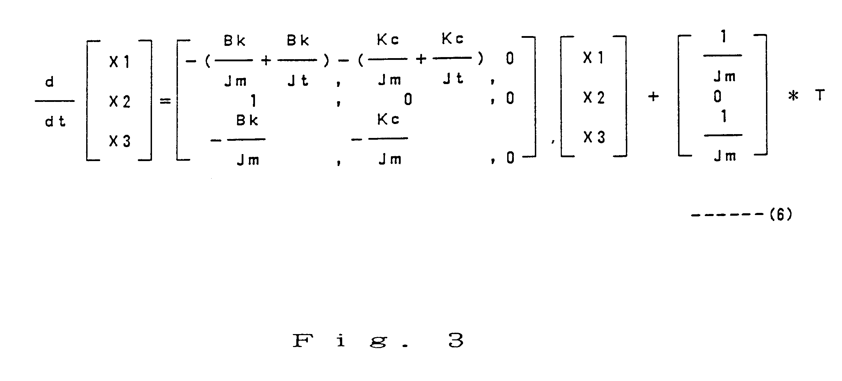

then the equation (6) shown in FIG. 3 is derived from the equations (4) and (5). The state variable that is observable is X3, and

$Y = [0\ 0\ 1][X1\ X2\ X3]^T$    (7).

From this state equation, there is generated an identity observer according to a general technique, i.e., the main observer 7, for estimating the state variables X1, X2, X3.

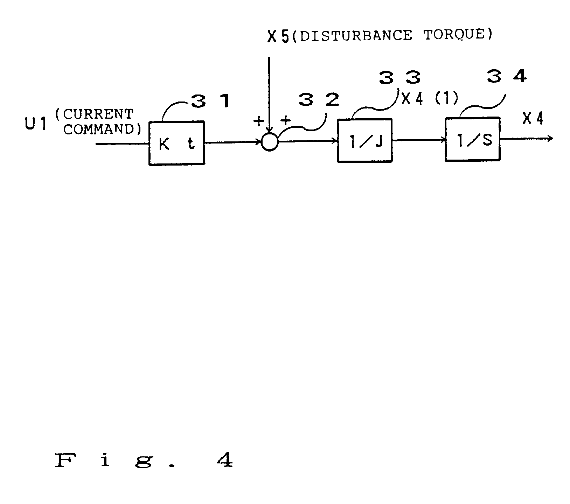

Now, the disturbance estimating observer will be described below. FIG. 4 shows in block form the disturbance estimating observer. An input signal U1 (an input current) is multiplied by a torque constant Kt in a block 31, producing an input torque that is supplied to an adder 32. The adder 32 adds the input torque and a disturbance torque (X5), and applies an output signal to a block 33, which divides the applied signal by the inertia J of the mechanical system. The block 33 applies an output signal $X4^{(1)}$ to a block 34. The block 34 integrates the signal $X4^{(1)}$ into an output signal X4. Denoted at S in the block 34 is a Laplace operator.

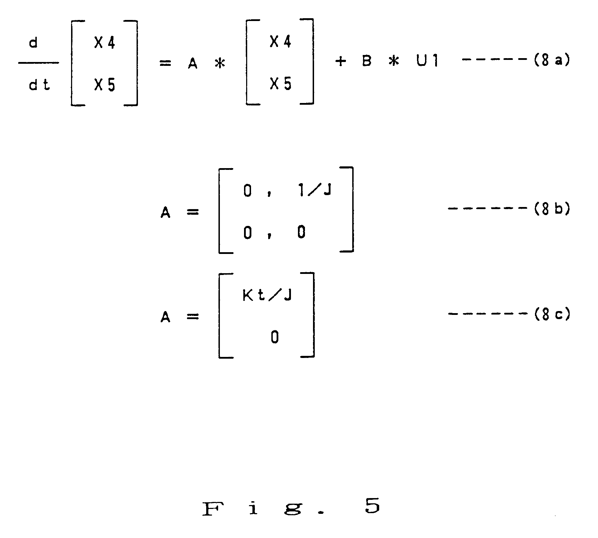

FIG. 5 shows a state equation for the disturbance estimating observer shown in FIG. 4. The state equation is indicated by (8a), whereas constants in the equation (8a) are represented by equations (8b) and (8c). The state variable that is observable is expressed by:

$Y = [1\ 0][X4\ X6]^T$.

According to a general technique for establishing an observer based on the above state equation, and identity observer for estimating X4, X5, i.e., the disturbance estimating observer 8, can be established.

Study of the disturbance estimating observer 8 indicated that the differential of the estimated disturbance X5 is $X5^{(1)} = 0$, and the disturbance estimating observer 8 estimates only a constant steady disturbance (a gravity term and a friction term that are subject to small changes). In determining an observer gain, the disturbance estimating observer 8 should have an initial frequency considerably lower than the resonant frequency so that the vibratory component will not affect the estimated disturbance X5. The estimated disturbance X5 is eliminated from the input signal to be applied to the main observer 7, i.e., subtracted from the input signal by the adder 6 shown in FIG. 1. Therefore, it is possible to remove adverse effects which the disturbance, i.e., the nonlinear component, has. Since the adverse effects of the nonlinear term are removed, the state feedback gain can be set to a high value, thus stabilizing the overall system. Specifically, it is possible to increase the vibration damping capability of the overall system.

While the present invention has been described with respect to the control of the mechanism of a robot, the principles of the invention are also applicable to the control of other mechanical systems of low rigidity.

As described above, since a disturbance is estimated by the disturbance estimating observer that estimates a nonlinear component, and is eliminated from an input signal to be applied to the main observer, state variables that are estimated by the main observer are not affected by a nonlinear term. It is therefore possible to increase the state feedback gain for stabilizing the overall system. The vibration of the overall system is also reduced.

## Claims

1. An observer control system for monitoring a mechanical system to estimate a state variable to control the mechanical system, comprising:

    a main observer for estimating a state variable with respect to a linear element of the mechanical system;

    a disturbance estimating observer for estimating a state variable with respect to a nonlinear element of the mechanical system; and

    an adder for eliminating said nonlinear element from an input signal to be applied to said main observer.

2. An observer control system according to claim 1, wherein said mechanical system comprises a mechanism of a robot.

3. An observer control system according to claim 1, wherein said nonlinear term includes at least a nonlinear term due to gravity.

4. An observer control system according to claim 1, wherein said disturbance estimating observer has an initial frequency set to a frequency which does not affect the frequency of the estimated stated variable required by said main observer.

Fig. 1

COMPEN-SATING CIRCUIT — 2
U — 1
3
MECHANICAL SYSTEM B — 4 a
MECHANICAL SYSTEM A — 4 b
D — 5
Y
X1, X2, X3
MAIN OBSERVER — 7
X3
6
DISTURBANCE ESTIMATING OBSERVER — 8
DS (X5)

Fig. 2

9 CPU

10 COMMON RAM

11 DSP

12 ROM

13 RAM

14 DSL

21 SERVO-AMPLIFIER

26 ARM

25 (BK)

24 (Kc)

23 PULSE CODER

22 SERVOMOTOR

$$\frac{d}{dt}\begin{bmatrix} X1 \\ X2 \\ X3 \end{bmatrix} = \begin{bmatrix} -\left(\dfrac{Bk}{Jm}+\dfrac{Bk}{Jt}\right) & -\left(\dfrac{Kc}{Jm}+\dfrac{Kc}{Jt}\right) & 0 \\ 1 & 0 & 0 \\ -\dfrac{Bk}{Jm} & -\dfrac{Kc}{Jm} & 0 \end{bmatrix},\begin{bmatrix} X1 \\ X2 \\ X3 \end{bmatrix} + \begin{bmatrix} \dfrac{1}{Jm} \\ 0 \\ \dfrac{1}{Jm} \end{bmatrix} * T$$

$$------(6)$$

F i g . 3

X 5 (DISTURBANCE TORQUE)

U1 (CURRENT COMMAND) — 3 1 — K t — 3 2 — 3 3 / X 4 (1) — 1/J — 3 4 — 1/S — X 4

F i g .  4

EP 0 483 367 A1

EP 0 483 367 A1

$$\frac{d}{dt} \begin{bmatrix} X4 \\ X5 \end{bmatrix} = A * \begin{bmatrix} X4 \\ X5 \end{bmatrix} + B * U1 \quad \text{-----(8 a)}$$

$$A = \begin{bmatrix} 0, & 1/J \\ 0, & 0 \end{bmatrix} \quad \text{------(8 b)}$$

$$A = \begin{bmatrix} Kt/J \\ 0 \end{bmatrix} \quad \text{------(8 c)}$$

F i g .  5

# INTERNATIONAL SEARCH REPORT

International Application No PCT/JP91/00583

## I. CLASSIFICATION OF SUBJECT MATTER (if several classification symbols apply, indicate all) 6

According to International Patent Classification (IPC) or to both National Classification and IPC

Int. Cl$^5$   G05B13/02

## II. FIELDS SEARCHED

Minimum Documentation Searched 7

| Classification System | Classification Symbols |
|---|---|
| IPC | G05B13/02 |

Documentation Searched other than Minimum Documentation
to the Extent that such Documents are Included in the Fields Searched 8

| | |
|---|---|
| Jitsuyo Shinan Koho | 1932 - 1991 |
| Kokai Jitsuyo Shinan Koho | 1971 - 1991 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-68903 (Fujitsu Ltd.), March 28, 1988 (28. 03. 88), (Family: none) | 1-4 |
| Y | JP, A, 62-126403 (Fanuc Ltd.), June 8, 1987 (08. 06. 87), (Family: none) | 1-4 |
| Y | JP, A, 61-251902 (Yokogawa Hokushin Electric Corp.), November 8, 1986 (08. 11. 86), (Family: none) | 1-4 |
| A | JP, A, 64-64007 (Hitachi, Ltd.), March 9, 1989 (09. 03. 89), (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 22, 1991 (22. 07. 91) | August 5, 1991 (05. 08. 91) |

| International Searching Authority | Signature of Authorized Officer |
|---|---|
| Japanese Patent Office | |

Form PCT/ISA/210 (second sheet) (January 1985)